# EUROPÄISCHE PATENTSCHRIFT

(11) **EP 4 378 837 B1**
(45) Veröffentlichungstag und Bekanntmachung des Hinweises auf die Patenterteilung: **11.06.2025**
(21) Anmeldenummer: 22210627.0
(22) Anmeldetag: 30.11.2022
(51) Int. Cl.: B64F 5/10, B64D 11/00

(54) **INSTALLATIONSSYSTEM UND VERFAHREN ZUR INSTALLATION EINER SELBSTTRAGENDEN FACHWERKSTRUKTUR**
INSTALLATION SYSTEM AND METHOD FOR INSTALLING A SELF-SUPPORTING FRAMEWORK STRUCTURE
SYSTÈME D'INSTALLATION ET PROCÉDÉ D'INSTALLATION D'UNE STRUCTURE EN TREILLIS AUTOPORTANTE

(43) Veröffentlichungstag der Anmeldung: 05.06.2024
(73) Patentinhaber: Airbus Operations GmbH, 21129 Hamburg (DE)
(72) Erfinder: Benthien, Hermann, 21129 Hamburg (DE); Poppe, Andreas, 21129 Hamburg (DE)

(56) Entgegenhaltungen:
- DE-A1- 102019 134 746
- DE-A1- 102021 102 576

## Beschreibung

### Technisches Gebiet

Die Erfindung betrifft ein Installationssystem und ein Verfahren zur Installation einer selbsttragenden Fachwerkstruktur in einem Rumpf eines Luftfahrzeug sowie ein Luftfahrzeug mit einer darin installierten, selbsttragenden Fachwerkstruktur.

### Technischer Hintergrund

Zur Befestigung von Einrichtungsgegenständen in einem Rumpf eines Luftfahrzeugs werden oftmals an seiner Innenseite eine Vielzahl von Haltern angeordnet, die individuell auf die aufzunehmenden Einrichtungsgegenstände abgestimmt sind. Es sind außerdem fachwerkartige Systeme bekannt, bei denen zur Anbindung von PSU-Einheiten und Über-Kopf-Staufächern dreiecksförmige Strukturen ausgebildet werden. Bei Luftfahrzeugen und insbesondere größeren Verkehrsflugzeugen mit Rumpflängen von weit über 10 m ist stets mit gewissen Fertigungstoleranzen zu rechnen, die bei der Anordnung von Haltern und bei der Konzeption von fachwerkartigen Strukturen berücksichtigt und gegebenenfalls ausgeglichen werden müssen, sodass die daran angeordneten Einrichtungsgegenstände in dem Rumpf eine klar vorgegebene Geometrie erfüllen. Die Installation von Einrichtungsgegenständen erfordert folglich das Prüfen und gegebenenfalls Anpassen ihrer Ausrichtung.

DE 10 2017 131 130 A1 offenbart ein Befestigungssystem zum Befestigen von Komponenten an einer Rumpfstruktur in einem Innenraum eines Luftfahrzeugs.

DE 10 2021 102 576 A1 schlägt einen Gelenkverbinder zum Verbinden mehrerer Bauteile vor, aufweisend eine erste zumindest teilweise sphärisch geformte

Lagerschale mit einem ersten radialen Anschlussabschnitt, mindestens eine zweite zumindest teilweise sphärisch geformte Lagerschale mit jeweils einem zweiten radialen Anschlussabschnitt, wobei die mindestens eine zweite Lagerschale komplementär zu der ersten Lagerschale geformt ist und dazu ausgebildet ist, die erste Lagerschale zumindest teilweise zu umgeben, sodass die erste Lagerschale und die mindestens eine zweite Lagerschale auf einer sphärischen Flächenabschnitt um ein gemeinsames Zentrum relativ zueinander bewegbar sind, und wobei der erste radiale Anschlussabschnitt und der zweite radiale Anschlussabschnitt dazu ausgebildet sind, ein in radialer Richtung verlaufendes Bauteil aufzunehmen.

DE 10 2019 134 746 A1 schlägt ein Komponentensystem zur Innenausstattung eines Luftfahrzeugs vor, aufweisend mindestens eine Ausstattungskomponente, mehrere Komponentenschienen, mehrere mit den Komponentenschienen in Eingriff bringbare und relativ an den Komponentenschienen bewegbare Führungselemente, mehrere Halteelemente, die mit den Führungselementen verbunden sind und dazu ausgebildet sind, mit einer Rumpfstruktur des Luftfahrzeugs oder der mindestens einen Ausstattungskomponente gekoppelt zu werden, und mehrere Arretiereinheiten, die an den Komponentenschienen und/oder an den Führungselementen angeordnet und dazu ausgebildet sind, die Führungselemente an einer jeweiligen Komponentenschiene zu arretieren, wobei zumindest zwei der Komponentenschienen an der mindestens einen Ausstattungskomponente oder der Rumpfstruktur in einem Abstand und parallel zueinander angeordnet sind, so dass die Ausstattungskomponente mittels der Komponentenschienen an in dem Luftfahrzeug räumlich festgelegten Führungselementen bzw. Komponentenschienen einschiebbar und an einer eingeschobenen Position durch die Arretiereinheiten arretierbar ist.

### Zusammenfassung der Erfindung

Es ist eine Aufgabe der Erfindung, ein Installationssystem oder ein Verfahren zur Installation einer Fachwerkstruktur in einem Rumpf eines Luftfahrzeugs vorzuschlagen, bei dem eine möglichst einfache Installation mit möglichst geringem manuellen Aufwand bei gleichzeitig sehr einfacher Kompensation von Toleranzen erfolgen kann.

Diese Aufgabe wird gelöst durch die Merkmale des unabhängigen Anspruchs 1. Vorteilhafte Ausführungsformen und Weiterbildungen sind den Unteransprüchen und der nachfolgenden Beschreibung zu entnehmen.

Es wird ein Installationssystem zur Installation einer selbsttragenden Fachwerkstruktur mit mehreren miteinander verbundenen Fachwerkelementen an einer Rumpfstruktur eines Luftfahrzeugs vorgeschlagen, wobei die Fachwerkstruktur radial äußere geschlossene Fachwerkknoten und radial innenliegende lösbare Verbindungsknoten umfasst, das Installationssystem aufweisend die genannte selbsttragende Fachwerkstruktur und eine auf einem Fußboden des Rumpfs bewegbare, mobile Tragvorrichtung mit einer oberen Aufnahme, ein Gestell zum temporären Halten der Fachwerkelemente in vorbestimmten Relativpositionen zueinander, und eine Bewegungsvorrichtung, die auf der oberen Aufnahme angeordnet ist und das Gestell in einer relativ zu der oberen Aufnahme einstellbaren Position hält, wobei die Bewegungsvorrichtung dazu ausgebildet ist, das Gestell in einer Transportposition und einer beliebigen Installationsposition zu halten, wobei das Gestell in den Installationspositionen weiter von der oberen Aufnahme beabstandet ist als in der Transportposition, wobei das Installationssystem dazu ausgebildet ist, bei in der Transportposition befindlichem Gestell die mobile Tragvorrichtung auf dem Fußboden in eine vorbestimmte Position innerhalb des Rumpfes zu bewegen und dort zu arretieren, das Gestell mittels der Bewegungsvorrichtung in eine geeignete Installationsposition zu bewegen und mittels eines an dem Gestell angeordneten Antriebs den mindestens einen arretierbare Verbindungsknoten zu arretieren.

Das Installationssystem ist als ein System zum Installieren von mehreren Fachwerkelementen in einer Rumpfstruktur zu verstehen. Die Rumpfstruktur könnte dabei Rumpfspanten und/oder andere Komponenten umfassen, die dazu ausgebildet sind, dem Rumpf seine erforderliche Form und Festigkeit zu verleihen. Das System umfasst dabei technische Hilfsmittel zum Bewegen, Halten und Installieren der Fachwerkelemente. Das Installationssystem umfasst ebenso die Fachwerkstruktur, und kann jedoch auch sämtliche an die Fachwerkelemente angeordnete Einrichtungen umfassen, die zur dauerhaften Installation der Fachwerkelemente notwendig sind. Das Installationssystem ist dazu geeignet, eine selbsttragende Fachwerkstruktur in dem Rumpf auszubilden. Erfindungsgemäß wird dies durch die weiter nachfolgend erläuterten Einrichtungen gegenüber bekannten Installationssystemen und - verfahren deutlich vereinfacht.

Die selbsttragende Fachwerkstruktur wird durch die Fachwerkelemente ausgebildet, die sich in verschiedene Raumrichtungen erstrecken und hierbei Knotenpunkte bilden, in denen sie miteinander verbunden sind. Die Fachwerkstruktur ist im installierten Zustand an dem Rumpf, insbesondere an Rumpfspanten, angeordnet und bildet ein räumliches, festes Konstrukt zum Anbinden von Einrichtungs- und Ausstattungsgegenständen.

Ein geschlossener Fachwerkknoten ist derart zu verstehen, dass in diesem Knoten die beteiligten Fachwerkelemente stets miteinander verbunden sind. Der geschlossene Knoten lässt sich folglich nicht oder zumindest nicht zerstörungsfrei, lösen oder öffnen.

Als ein lösbarer Verbindungsknoten im Sinne der Erfindung ist eine Vorrichtung zu verstehen, die mit mehreren, in einem Knoten zusammenlaufenden Fachwerkelementen verbindbar ist. Beispielhaft kann der lösbare Verbindungsknoten mit drei, vier oder mehr Fachwerkelementen verbunden werden, die in dem Knotenverbinder einen Schnittpunkt bilden. Der Verbindungsknoten ist dazu ausgebildet, eine Verbindung mit den betreffenden Fachwerkelementen herzustellen oder zu lösen. Wie weiter nachfolgend etwas weiter ausgeführt wird, kann die Fachwerkstruktur in rumpfseitigen Aufnahmen oder dergleichen befestigt werden, wonach sich die räumlichen Positionen einzelner Fachwerkelemente der Fachwerkstruktur in Abhängigkeit von toleranzbehafteten Rumpfmaßen ergeben. Ihre Orientierungen zueinander, die sich durch Winkel zwischen einzelnen Fachwerkelementen ausdrücken, sind indes zur Gewährleistung der strukturellen Auslegung vorbestimmt. Der lösbare Verbindungsknoten ist dazu ausgebildet, toleranzbedingte Maßabweichungen durch Arretierung der Fachwerkelemente in ihren Orientierungen auszugleichen.

Ein Fachwerkelement könnte ein Fachwerkstab oder ein anderes, das Fachwerk ausbildendes Element sein. Ein Fachwerkstab könnte bevorzugt ein stabförmiges Element sein, das Zug- und Druckkräfte aufnehmen kann. Bevorzugt ist ein Fachwerkstab hohl. Es kann aus einem metallischen Material, etwa einer geeigneten Aluminiumlegierung bestehen. Alternativ sind faserverstärkte Kunststoffe denkbar. Als Alternative könnten auch plattenartige Fachwerkelemente eingesetzt werden oder eine Kombination aus Fachwerkstäben und plattenartigen Fachwerkelementen oder anderen. Beispielsweise ist denkbar, ein Fachwerk derart aufzubauen, dass eine PSU-Einheit oder dergleichen einen Teil des Fachwerks bildet.

Der Fußboden des Rumpfes ist bevorzugt als Fußboden der Kabine zu verstehen, die in dem Rumpf ausgebildet wird. Die mobile Tragvorrichtung kann auf dem Fußboden bevorzugt in axialer Richtung in dem Rumpf verfahren werden, um dort in eine vorbestimmte Position gebracht zu werden. Die Tragvorrichtung könnte aktiv durch einen integrierten Antrieb oder durch Ziehen oder Schieben auf dem Fußboden verfahren werden. Eine Arretierung der Tragvorrichtung könnte das Blockieren von Rädern, das formschlüssige Verbinden mit einer Schiene oder andere Maßnahmen umfassen. Die Tragvorrichtung könnte auch als eine Mehrzahl von Tragvorrichtungen ausgeführt sein, insbesondere eine Kette von Tragvorrichtungen, die miteinander gekoppelt sind. Die miteinander gekoppelten Tragvorrichtungen können entlang eines gemeinsamen Bewegungspfads in den Rumpf eingefahren werden, um dort einen bestimmten Teil der axialen Länge des Rumpfes auszufüllen und dort eine Fachwerkstruktur zu installieren. Es ist außerdem denkbar, zwei derartige Anordnungen von Tragvorrichtungen vorzusehen, die gleichzeitig auf dem Fußboden in den Rumpf eingefahren werden, um auf zwei Kabinenseiten gleichzeitig jeweils eine Fachwerkstruktur zu installieren.

Das Gestell zum temporären Halten der Fachwerkstruktur ist auf die Form und Orientierungen der Fachwerkelemente angepasst. Bevorzugt kann die vormontierte Fachwerkstruktur von oben auf das Gestell aufgelegt, aufgesetzt oder hineingestellt werden, um dem Gestell zu erlauben, die Fachwerkstruktur in einer gewünschten räumlichen Orientierung zu halten und durch die Bewegungsvorrichtung bewegt zu werden.

Die Bewegungsvorrichtung erlaubt, das Gestell in einer Transportposition und einer beliebigen Installationsposition zu halten. Die Transportposition könnte als ein kompaktierter Zustand der Anordnung aus Tragvorrichtung, Bewegungsvorrichtung und Gestell verstanden werden. Die vormontierte Fachwerkstruktur kann daher außerhalb des Rumpfs vormontiert und auf das Gestell gebracht werden, um anschließend in den Rumpf hineingefahren zu werden. An der für die Installation bestimmten Position kann die Bewegungsvorrichtung anschließend das Gestell insbesondere anheben und radial nach außen an den Rumpf heranfahren.

Die Bewegungsvorrichtung weist weiterhin einen Antrieb auf, der mit einem entsprechenden Mittel des Verbindungsknotens verbind- bzw. koppelbar ist, um diesen selektiv zu arretieren. Wie weiter nachfolgend ausgeführt wird, könnten die Fachwerkstruktur und Aufnahmen an der Rumpfstruktur derart aneinander angepasst sein, dass die Bewegungsvorrichtung die Fachwerkstruktur kabinenaußenseitig an der Rumpfstruktur in Aufnahmen einrasten lässt, um anschließend mit dem Antrieb den Verbindungsknoten zu arretieren, wobei die Fachwerkelemente dann eine sich durch toleranzbedingte Maßabweichungen ergebende und arretierte Position aufweisen.

Insgesamt ergibt sich durch das erfindungsgemäße Installationssystem eine besonders einfache, weitgehend vollständig automatisierbare Installation einer Fachwerkstruktur in einem Rumpf, wobei gleichzeitig toleranzbedingte Maßabweichungen kompensierbar sind.

In einer vorteilhaften Ausführungsform weist der Verbindungsknoten mehrere winklig zueinander angeordnete Knotenelemente auf, die jeweils formschlüssig mit einem Fachwerkelement verbindbar sind. Jedes Knotenelement ist mit einem Ende eines Fachwerkelements verbindbar. Sind die Fachwerkelemente hohl, könnte etwa jeweils eines der Knotenelemente in jeweils ein Fachwerkelement eingesteckt werden, um dort formschlüssig mit dem Fachwerkelement verbunden zu werden. Ein Verbindungsknoten könnte beispielsweise zwei in axialer Richtung verlaufende Fachwerkelemente, ein radial verlaufendes Fachwerkelement, ein vertikal verlaufendes Fachwerkelement und mindestens ein diagonal verlaufendes Fachwerkelement aufnehmen. Die sich daraus ergebenden Knotenelemente sind in entsprechenden Winkeln zueinander angeordnet und geben damit die Ausrichtung der Fachwerkelemente vor.

In einer vorteilhaften Ausführungsform ist der Verbindungsknoten starr. Folglich sind die Winkel der einzelnen Knotenelemente unveränderlich und sorgen folglich für eine gewünschte Ausrichtung der damit verbundenen Fachwerkelemente. Ein unerwünschtes Schrägstellen von in axialer Richtung, radialer Richtung und vertikaler Richtung verlaufenden Fachwerkelementen kann damit verhindert werden.

In einer vorteilhaften Ausführungsform weist der Verbindungsknoten für jedes betreffende Fachwerkelement erste Formschlussmittel auf, die mit zweiten Formschlussmitteln an den Fachwerkelementen komplementär ausgebildet sind, wobei die ersten Formschlussmittel durch ein in dem Verbindungsknoten vorgesehenes Stellglied in eine Arretierposition, in der sie in die zweiten Formschlussmittel eingreifen, und in eine Steckposition, in der sie sich zu den zweiten Formschlussmitteln bewegen lassen, bringbar sind. Das erste Formschlussmittel könnte beispielsweise eine erste Verzahnung umfassen, das zweite Formschlussmittel eine damit korrespondierende Verzahnung. Die Fachwerkelemente sind durch diese Ausgestaltung in der Steckposition axial beweglich und können stets in ihrer toleranzbedingten, individuellen, eingenommenen Position durch das Eingreifen der Formschlussmittel miteinander verbunden werden. Das Stellglied könnte beispielsweise dazu dienen, die ersten Formschlussmittel an dem Knotenverbinder zu bewegen und damit ein selektives Eingreifen in die zweiten Formschlussmittel erlauben.

In einer vorteilhaften Ausführungsform sind die ersten Formschlussmittel in der Steckposition relativ zu den zweiten Formschlussmitteln verschiebbar und in der Arretierposition in der jeweiligen Lage arretierbar. Beispielsweise könnten die ersten Formschlussmittel des jeweiligen Knotenelements des Verbindungsknotens in radialer Richtung verschiebbar sein. Hierzu könnten mehrere, über einen Umfang des Knotenelements verteilte erste Formschlussmittel vorgesehen sein, die durch das Stellglied an dem Knotenelement radial nach außen oder nach innen verschiebbar sind. Zweite Formschlussmittel könnten radial innen in dem Hohlraum des Fachwerkelements angeordnet sein, in den das Knotenelement einsteckbar ist. Durch Einstecken des Knotenelements in das Fachwerkelement und anschließendes Bewegen des Stellglieds können die ersten Formschlussmittel in die zweiten Formschlussmittel eingreifen, sodass eine Arretierung des betreffenden Fachwerkelements an dem Verbindungsknoten erfolgt.

In einer vorteilhaften Ausführungsform ist das Stellglied mit dem Antrieb verbindbar. Der Verbindungsknoten könnte an einer Außenseite ein Eingriffselement umfassen, das mechanisch mit dem Antrieb verbindbar ist. Es kann sich anbieten, das Eingriffselement derart auszugestalten, dass optisch eindeutig erkennbar ist, ob sich das Stellglied in der Arretierposition oder in der Steckposition befindet. Das Eingriffselement könnte hierzu länglich ausgebildet sein oder eine längliche Markierung aufweisen und lediglich um einen begrenzten Winkel von beispielsweise 90° oder weniger bewegbar sein. Das Eingriffselement könnte in der Arretierungsposition beispielsweise parallel zu einer Längsachse des Rumpfes ausgerichtet sein und in einer Steckposition vertikal oder schräg dazu. Es ist günstig, das Eingriffselement an einer von einer Rumpfwandung abgewandten Seite der Fachwerkstruktur anzuordnen, um eine gute Erreichbarkeit zu gewährleisten.

In einer vorteilhaften Ausführungsform weist das Installationssystem ferner mehrere Rastaufnahmen auf, die in der Rumpfstruktur befestigbar sind und dazu ausgebildet sind, Rastelemente von radial außenliegenden Knoten der Fachwerkstruktur aufzunehmen und durch von dem betreffenden Knoten auf die jeweilige Aufnahme gerichteten mechanischen Druck damit zu verrasten. Die Rastaufnahmen könnten insbesondere in Rumpfspanten angeordnet sein. Die Rastaufnahmen könnten dazu ausgebildet sein, ein nur grob zu der jeweiligen Rastaufnahme ausgerichtetes Rastelement in eine Rastöffnung der betreffenden Rastaufnahmen zu führen, sodass sich das betreffende Fachwerkelement bzw. der betreffende Knoten in eine toleranzbehaftete Aufnahmeposition der Rastaufnahmen bewegt. Die Tragvorrichtung und/oder die Bewegungsvorrichtung könnten dazu ausgebildet sein, den erforderlichen, mechanischen Druck auf die vormontierte Fachwerkstruktur auszuüben, um die Verrastung in der betreffenden Rastöffnung durchzuführen. Das Gestell sollte daher in der Lage sein, die vormontierte Fachwerkstruktur ausreichend fest zu halten, sodass die Kraft auf die Fachwerkstruktur übertragbar ist.

In einer vorteilhaften Ausführungsform weist das Gestell mehrere nach oben offene Aufnahmen auf, in oder auf die die Fachwerkelemente bringbar sind. Die Aufnahmen sind bevorzugt korrespondierend mit unteren Fachwerkelementen der vormontierten Fachwerkstruktur ausgebildet. Diese können längsaxial und radial ausgerichtete Fachwerkelemente aufnehmen und hierfür beispielsweise als Schlitze oder Nuten ausgebildet sein. Es ist denkbar, auch eine Vielzahl von nach oben geöffneten, beispielsweise U-förmigen Haltern einzusetzen, in die die vormontierte Fachwerkstruktur einsetzbar ist.

In einer vorteilhaften Ausführungsform ist eine Teilmenge der offenen Aufnahmen radial ausgerichtet, wobei die radial ausgerichteten Aufnahmen in axialer Richtung federnd gelagert sind. Die radial ausgerichteten Aufnahmen können eine Kraft auf radial ausgerichtete Fachwerkelemente ausüben, sodass sich radial außenliegende Enden dieser Fachwerkelemente, an denen ein Rastelement angeordnet sein kann, in entsprechende Aufnahmen drücken lassen. Durch die federnde Lagerung entsteht keine Verspannung der radialen Fachwerkelemente, da toleranzbedingt unterschiedliche Endpositionen der radialen Fachwerkelemente durch unterschiedlich komprimierte Federn ausgeglichen werden können.

In einer vorteilhaften Ausführungsform weist das Installationssystem ferner mindestens eine Transportsicherung zum Halten der Fachwerkstruktur in den offenen Aufnahmen auf. Die Transportsicherung kann beispielsweise ein Band, ein Klettband, ein Klebeband, ein Clip, oder ein anderes, formschlüssig, kraftschlüssig oder stoffschlüssig wirkendes Mittel sein, um die vormontierte Fachwerkstruktur an dem Gestell zu fixieren. Die Fixierung muss hierbei nicht besonders fest sein, um der Bewegungsvorrichtung und/oder der Tragvorrichtung zu ermöglichen, beim Herausfahren aus dem Rumpf das Gestell von der Fachwerkstruktur zu lösen.

Die Erfindung betrifft ferner ein Luftfahrzeug, aufweisend einen Rumpf und eine darin angeordnete, selbsttragende Fachwerkstruktur, die mittels eines Installationssystems nach der vorhergehenden Beschreibung realisiert ist.

In einer vorteilhaften Ausführungsform ist die Fachwerkstruktur an radial außenliegenden Bereichen einer Passagierkabine zur Aufnahme von Über-Kopf-Staufächern angeordnet.

Weiter betrifft die Erfindung ein Verfahren zur Installation einer selbsttragenden Fachwerkstruktur mit mehreren miteinander verbundenen Fachwerkelementen an einer Rumpfstruktur eines Luftfahrzeugs, wobei die Fachwerkstruktur radial äußere geschlossene Fachwerkknoten und radial innenliegende lösbare Verbindungsknoten umfasst, das Verfahren aufweisend die Schritte des Bereitstellens einer vormontierten Fachwerkstruktur in dem Rumpf auf einem Gestell, das von einer Tragvorrichtung über eine Bewegungsvorrichtung bewegbar gehalten wird, des Bewegens der Tragvorrichtung an eine vorbestimmte Position innerhalb des Rumpfs, des Arretierens der Tragvorrichtung, des Anhebens des Gestells und verfahren in radialer Richtung zum Ausrichten an einer Rumpfstruktur, des Verrastens der äußeren Fachwerkknoten mit korrespondierenden Rastaufnahmen an der Rumpfstruktur durch Drängen der Fachwerkstruktur in axialer Richtung in die Rastaufnahmen, wobei eine vorbestimmte Ausrichtung der Fachwerkelemente zueinander aufrechterhalten wird, des Arretierens der radial innenliegenden Verbindungsknoten, und des Entfernens des Gestells.

In einer vorteilhaften Ausführungsform umfasst das Entfernen des Gestells das Absenken des Gestells, das Bewegen des Gestells in eine von der Rumpfstruktur abgewandte Richtung und das Herausbewegen aus dem Rumpf.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung eines Rumpfs mit einem darin angeordneten Installationssystem.
- Fig. 2: eine schematische Draufsicht auf eine Fachwerkstruktur.
- Fig. 3: eine schematische Seitenansicht eines Verbindungsknotens.
- Fig. 4a: eine schematische Ansicht eines Teils des Installationssystems an einem Rumpfspant.
- Fig. 4b-4d: schematische Ansichten des Gestells bei der Installation des Fachwerks.
- Fig. 5a-5b: verschiedene weitere Varianten von Fachwerkstrukturen in schematischen Ansichten.
- Fig. 6a: eine schematische Darstellung des Annäherns des Fachwerks an Aufnahmen in Rumpfspanten.
- Fig. 6b: eine schematische Darstellung des Verrastens des Fachwerks in Aufnahmen in Rumpfspanten.
- Fig. 7: eine schematische Darstellung nach Fig. 6a mit modifizierten offenen Aufnahmen mit Transportsicherungen.
- Fig. 8: ein Luftfahrzeug.

### Detaillierte Beschreibung von Ausführungsbeispielen

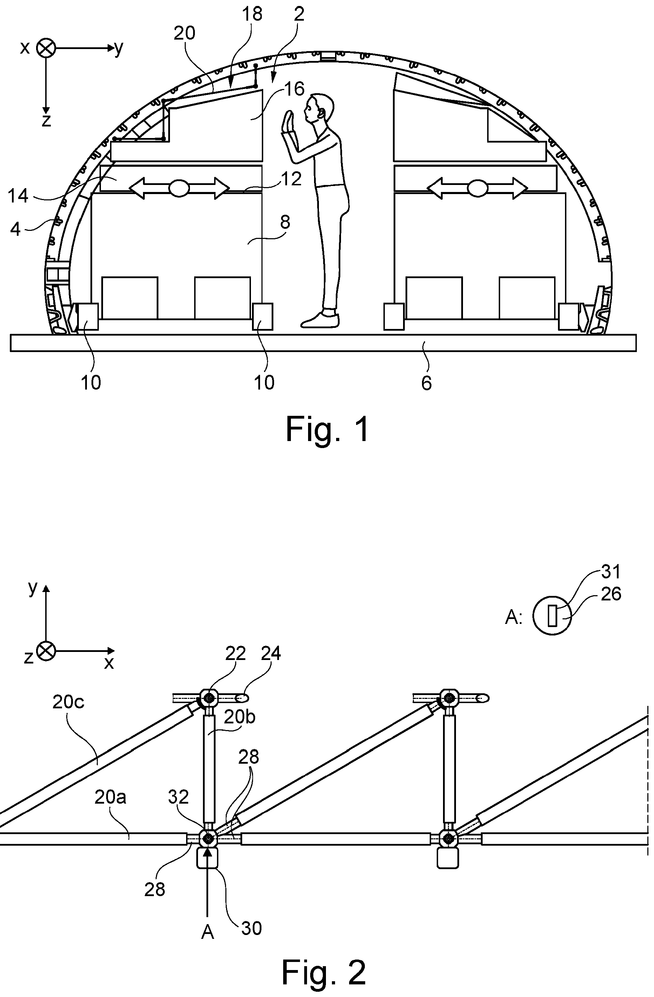

Fig. 1 zeigt ein Installationssystem 2 in einem Rumpf 4 eines Luftfahrzeugs. Hier ist ein Fußboden 6 dargestellt, auf dem eine mobile Tragvorrichtung 8 angeordnet und auf dem Fußboden 6 bewegbar ist. Hierzu weist die Tragvorrichtung 8 mehrere Räder 10 auf, die auf dem Fußboden 6 aufstehen und eine radgeführte Bewegung auf dem Fußboden 6 ermöglichen.

Die Tragvorrichtung 8 ist dazu ausgebildet, insbesondere entlang einer Längsachse des Rumpfes 4 bewegt zu werden. Die Tragvorrichtung 8 weist eine obere Aufnahme 12 auf, auf der eine Bewegungsvorrichtung 14 angeordnet ist. Diese ist dazu ausgebildet, ein Gestell 16 in drei Raumrichtungen zu bewegen, d.h. nach in Längsrichtung des Rumpfs 4, in Radialrichtung und in der Vertikalen. Auf dem Gestell 16 befindet sich eine vormontierte Fachwerkstruktur 18, welche aus mehreren Fachwerkelementen 20 besteht. Die Bewegungsvorrichtung 14 ist dafür vorgesehen, das Gestell 16 und damit die vormontierte Fachwerkstruktur 18 derart an dem Rumpf 4 zu platzieren, dass sie dort dauerhaft befestigt wird bzw. werden kann. Hieran können Über-Kopf-Staufächer, PSU-Einheiten oder anderes befestigt werden.

Fig. 2 zeigt eine Draufsicht auf die Fachwerkstruktur 10. Hier sind axiale Fachwerkelemente 20a, radiale Fachwerkelemente 20b und diagonale Fachwerkelemente 20c gezeigt. Radial außen liegend, d.h. zu der Rumpfstruktur 4 hin gerichtet, sind äußere Knoten 22 angeordnet, die jeweils mit einem Rastelement 24 ausgestattet sind, die axial ausgerichtet sind und in axialer Richtung einrastbar sind. Das Rastelement 24 ist dazu vorgesehen, durch mechanischen Druck in Axialrichtung in korrespondierende Aufnahmen (hier nicht gezeigt) an Rumpfspanten eingerastet zu werden.

Radial innenliegend, d.h. von der Rumpfstruktur 4 abgewandt, sind Knotenverbinder 26 vorgesehen, die jeweils mehrere, winklig zueinander angeordnete Knotenelemente 28 aufweisen, welche mit Fachwerkelementen 20 verbindbar sind. Die Fachwerkelemente 20 können jeweils entlang ihrer Längsachse an dem Knotenelement 28 verschoben werden. Ein zu dem System 2 gehörender Antrieb 30 ist über ein Eingriffselement 31 mit einem Stellglied 32 im Innern des Verbindungsknotens 26 koppelbar und kann die Knotenelemente 28 formschlüssig mit den Fachwerkelementen 20 verbinden oder davon lösen.

Sind die Rastelemente 24 in korrespondierenden Aufnahmen an Rumpfspanten eingerastet, ist das Gestell 16 dazu in der Lage, insbesondere die radialen Fachwerkelemente 20b und die axialen Fachwerkelemente 20a auf gewünschte Weise auszurichten und anschließend durch den Antrieb 30 den Verbindungsknoten 26 mit den Fachwerkelementen 20 zu verbinden.

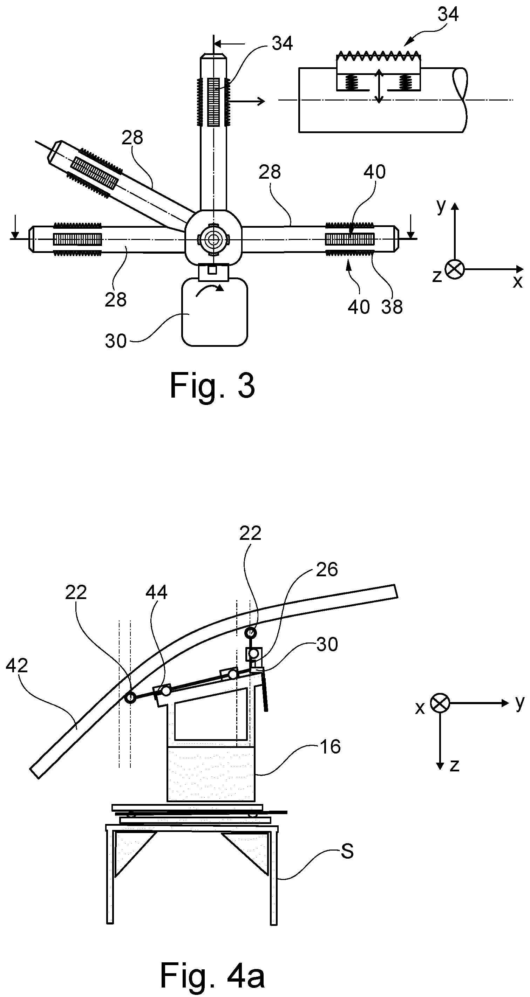

Fig. 3 zeigt den Verbindungsknoten 26 in einer Draufsicht. Hier sind erste Formschlussmittel 34 erkennbar, die in Form verzahnter Elemente ausgebildet sind, die sich in einer radialen Richtung an den Knotenelementen 28 bewegen lassen. Bevorzugt ist das Stellglied 32 in der Lage, die ersten Formschlussmittel 34 bedarfsweise radial nach außen zu verschieben.

Beispielhaft ist an einem der Knotenelemente 28 zusätzlich ein modifiziertes erstes Formschlussmittel 36 angeordnet, das statt einer Verzahnung mehrere radiale Vorsprünge 38 und dazwischenliegende, breite Rillen 40 umfasst. Korrespondierende, zweite Formschlussmittel können sich durch die Rillen 40 in axialer Richtung bei ausreichender axialer Kraft etwas bewegen. Es ist vorstellbar, derartige erste Formschlussmittel 36 an nur einer geringen Anzahl von Knotenverbindern 26 einzusetzen, beispielsweise an jedem vierten, fünften oder sechsten Verbindungsknoten 26, um eine bedarfsweise längsaxiale Verschiebung von Fachwerkelementen 20a in Längsrichtung zu erlauben, um eine Verspannung der Fachwerkstruktur 18 bei thermischer Ausdehnung oder Kontraktion zu verhindern.

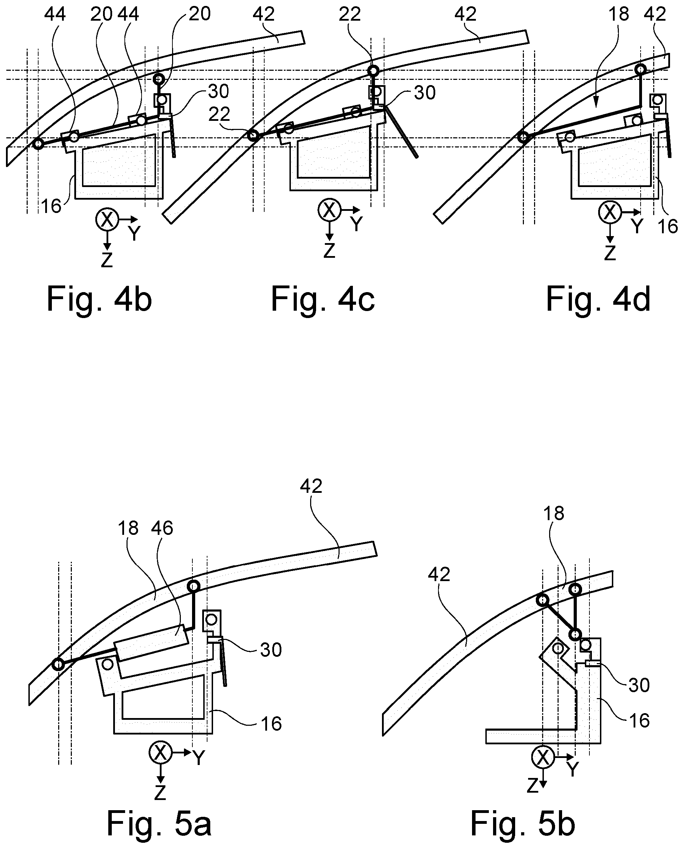

In Fig. 4a wird die Tragvorrichtung 8 gezeigt, auf der das Gestell 16 in einer Transportposition vorliegt. Die vormontierte Fachwerkstruktur 18 befindet sich folglich vertikal und radikal in einem ausreichenden Abstand von einem Rumpfspant 42 und kann folglich in längsaxialer Richtung in dem Rumpf 4 verfahren werden. In Fig. 4b wird diese Bewegungsrichtung gezeigt, die sich in die Zeichnungsebene hinein erstreckt. Das Gestell 16 weist zum Tragen der Fachwerkstruktur 18 nach oben offene Aufnahmen 44 auf, in die die formatierte Fachwerkstruktur 18 eingesetzt ist.

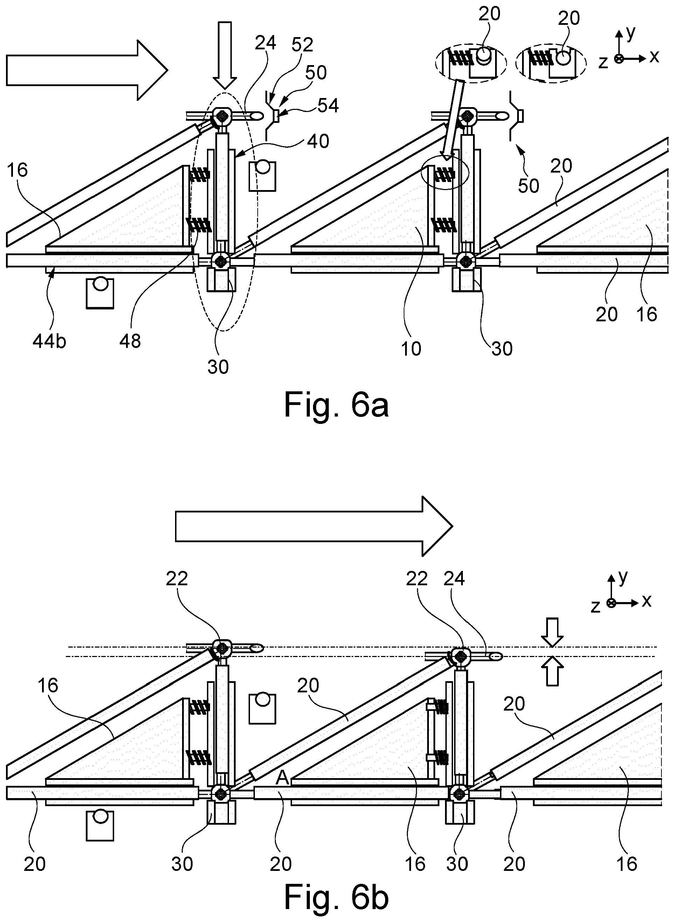

In Figur 4c ist das Gestell 16 nach oben und radial nach außen zu dem Rumpfspant 42 hin bewegt, sodass äußere Knoten 22 der Fachwerkstruktur 18 direkt an den Rumpfspant 42 geführt werden. Nach dem Einrasten, wie in Fig. 6b gezeigt wird, ist die Fachwerkstruktur 18 an dem Rumpfspant 42 befestigt und verbleibt dort. Der Antrieb 30 kann dann die Verbindungsknoten 26 der Fachwerkstruktur 18 arretieren. Anschließend wird das Gestell 16 vertikal in Richtung des Fußbodens 6 und radial nach innen bewegt, um es von der Fachwerkstruktur 18 zu lösen. Anschließend kann die Tragvorrichtung 8 aus dem Rumpf 4 herausbewegt werden.

In Fig. 5a wird eine Fachwerkstruktur 18 mit einem darin integrierten PSU-Element 46 gezeigt. In Fig. 5b ist eine abweichende Gestalt einer Fachwerkstruktur 18 gezeigt. Es sind selbstverständlich weitere Fachwerkstrukturen denkbar, die mithilfe des Installationssystems 2 in dem Rumpf 4 installiert werden können.

Fig. 6a zeigt das Gestell 16 in einer Draufsicht, wobei die vormontierte Fachwerkstruktur 18 in den offenen Aufnahmen 44 liegt. Hier ist zu erkennen, dass eine radial ausgerichtete Aufnahme 44a, mittels Federn 48 federnd an dem Gestell 16 gelagert ist. Bevorzugt ist die radiale Aufnahme 44a so an dem Gestell 16 geführt, dass sie stets senkrecht zu einer axialen Aufnahme 44b verläuft und die in beiden Aufnahmen 44a und 44b angeordneten Fachwerkelemente 20 stets senkrecht zueinander ausgerichtet sind.

Die Aufnahmen 44a und 44b erlauben weiterhin einen Toleranzausgleich in vertikaler Richtung, da die Fachwerkelemente 20 schwimmend darin gelagert sind, wie in den beiden Detaildarstellungen in der Zeichnungsebene oben rechts erkennbar. Durch Bewegen des Gestells 16 in längsaxialer Richtung erreichen die an den äußeren Knoten 22 angeordneten Rastelemente 24 entsprechende Rastaufnahmen 50, welche einen sich verjüngenden Einlaufbereich 52 besitzen, der das jeweilige Rastelement 24 und damit die daran befestigten Knoten 22 mit den jeweils angebundenen Fachwerkelementen 20 bewegt, sodass die Rastelemente 24 jeweils mit einer Rastöffnung 54 verrasten.

Fig. 6b zeigt den Vorgang des Verrastens. Durch die federnde Lagerung der radialen Aufnahmen 44a kann eine toleranzbedingte Maßabweichung in längsaxialer Richtung ausgeglichen werden, indem sich die einzelnen Federn 48 je nach resultierender Position der radialen Aufnahmen 44a mehr oder weniger stark komprimieren und gleichzeitig eine ausreichende Rastkraft ausüben. Fig. 6b zeigt etwa eine resultierende Toleranzkompensation in radialer Richtung (gestrichelte Linien) und durch die unterschiedlich komprimierten Federn 48 in längsaxialer Richtung.

Durch das anschließende Zurückbewegen des Gestells 16 in längsaxialer Richtung werden die Federn 48 wieder entspannt und durch Absenken des Gestells 16 ist die Fachwerkstruktur 18 schließlich freigegeben und kann mit entsprechenden Einrichtungen ausgestattet werden.

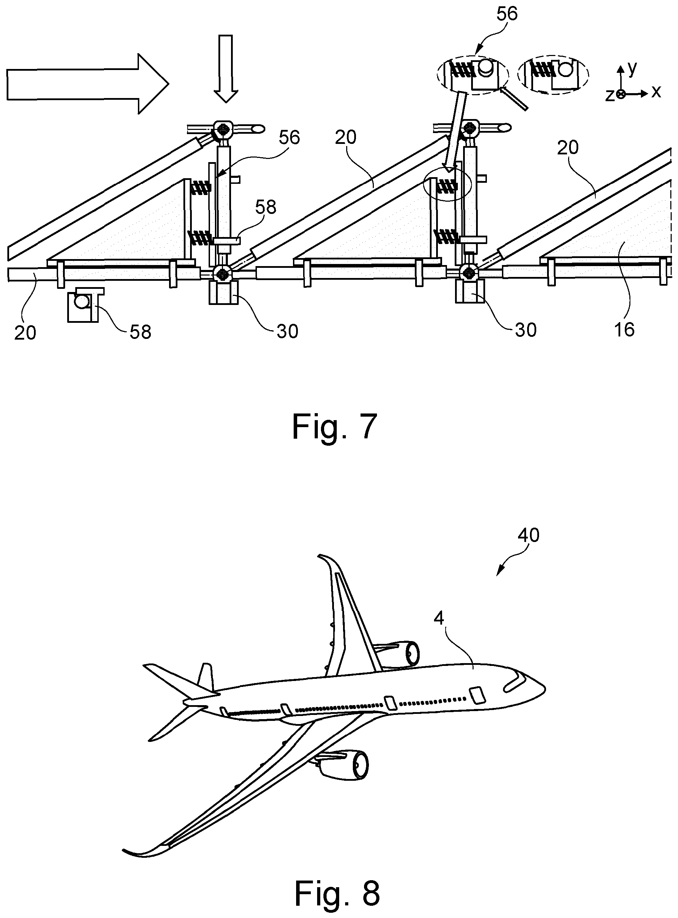

Fig. 7 stellt etwas modifizierte offene Aufnahmen 56 dar, die nicht nur nach oben, sondern auch in axialer Richtung zu einer den Federn 48 abgewandten Seite geöffnet sind. Die Fachwerkstruktur 18 ist durch mehrere Transportsicherungen 58 in den Aufnahmen 56 gesichert. Diese könnten manuell entfernt werden, sobald die Fachwerkstruktur 18 an den Rumpfspanten 42 angeordnet ist. Allerdings könnten die Transportsicherungen 58 auch durch Zurückfahren des Gestells 16 gelöst werden, um anschließend manuell von der Fachwerkstruktur 18 entfernt zu werden.

Fig. 8 zeigt ein Luftfahrzeug 60 mit einem Rumpf 4, in dem ein Fachwerk 18 mittels eines Installationssystems 2 installiert ist.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: Installationssystem
- 4: Rumpf
- 6: Fußboden
- 8: Tragvorrichtung
- 10: Rad
- 12: obere Aufnahme
- 14: Bewegungsvorrichtung
- 16: Gestell
- 18: vormontierte Fachwerkstruktur
- 20: Fachwerkstab
- 22: äußerer Knoten
- 24: Rastelement
- 26: Verbindungsknoten
- 28: Knotenelement
- 30: Antrieb
- 31: Eingriffselement
- 32: Stellglied
- 34: erstes Formschlussmittel
- 36: modifiziertes erstes Formschlussmittel
- 38: radialer Vorsprung
- 40: Rille
- 42: Rum pfspant
- 44: offene Aufnahme
- 46: PSU-Element
- 48: Feder
- 50: Rastaufnahme
- 52: Einlaufbereich
- 54: Rastöffnung
- 56: offene Aufnahme
- 58: Transportsicherung
- 60: Luftfahrzeug

## Patentansprüche

1. Installationssystem (2) zur Installation einer selbsttragenden Fachwerkstruktur an einer Rumpfstruktur (42) eines Luftfahrzeugs (60), das Installationssystem (2) aufweisend:
eine Fachwerkstruktur (18) mit mehreren miteinander verbundenen Fachwerkelementen (20, 46),
eine auf einem Fußboden (6) des Rumpfs (4) bewegbare, mobile Tragvorrichtung (8) mit einer oberen Aufnahme (12),
ein Gestell (16) zum temporären Halten der Fachwerkelemente (20, 46) in vorbestimmten Relativpositionen zueinander, und
eine Bewegungsvorrichtung (14), die auf der oberen Aufnahme (12) angeordnet ist und das Gestell (16) in einer relativ zu der oberen Aufnahme (12) einstellbaren Position hält,
wobei die Fachwerkstruktur (18) radial äußere geschlossene Fachwerkknoten (22) und radial innenliegende lösbare Verbindungsknoten (26) umfasst,
wobei die Bewegungsvorrichtung (14) dazu ausgebildet ist, das Gestell (16) in einer Transportposition und einer beliebigen Installationsposition zu halten, wobei das Gestell (16) in den Installationspositionen weiter von der oberen Aufnahme (12) beabstandet ist als in der Transportposition,
wobei das Installationssystem (2) dazu ausgebildet ist, bei in der Transportposition befindlichem Gestell (16) die mobile Tragvorrichtung (8) auf dem Fußboden (6) in eine vorbestimmte Position innerhalb des Rumpfes (4) zu bewegen und dort zu arretieren, das Gestell (16) mittels der Bewegungsvorrichtung (14) in eine geeignete Installationsposition zu bewegen und mittels eines an dem Gestell (16) angeordneten Antriebs (30) den mindestens einen arretierbaren Verbindungsknoten (26) zu arretieren.

2. Installationssystem (2) nach Anspruch 1,
wobei der Verbindungsknoten (26) mehrere winklig zueinander angeordnete Knotenelemente (28) aufweist, die jeweils formschlüssig mit einem Fachwerkelement (20, 46) verbindbar sind.

3. Installationssystem (2) nach Anspruch 1 oder 2,
wobei der Verbindungsknoten (26) starr ist.

4. Installationssystem (2) nach Anspruch 2,
wobei der Verbindungsknoten (26) für jedes betreffenden Fachwerkelement (20, 46) erste Formschlussmittel (34) aufweist, die mit zweiten Formschlussmitteln an den Fachwerkelementen (20, 46) komplementär ausgebildet sind, und
wobei die ersten Formschlussmittel (34) durch ein in dem Verbindungsknoten (26) vorgesehenes Stellglied (32) in eine Arretierposition, in der sie in die zweiten Formschlussmittel eingreifen, und in eine Steckposition, in der sie sich zu den zweiten Formschlussmitteln bewegen lassen, bringbar sind.

5. Installationssystem (2) nach Anspruch 4,
wobei die ersten Formschlussmittel (34) in der Steckposition relativ zu den zweiten Formschlussmitteln verschiebbar sind und in der Arretierposition in der jeweiligen Lage arretierbar sind.

6. Installationssystem (2) nach Anspruch 4 oder 5,
wobei das Stellglied (32) mit dem Antrieb (30) verbindbar ist.

7. Installationssystem (2) nach einem der vorhergehenden Ansprüche,
ferner aufweisend mehrere Rastaufnahmen (50), die in der Rumpfstruktur (42) befestigbar sind und dazu ausgebildet sind, Rastelemente (24) von radial außenliegenden Knoten (22) der Fachwerkstruktur (18) aufzunehmen und durch von dem betreffenden Knoten (22) auf die jeweilige Rastaufnahme (50) gerichteten mechanischen Druck damit zu verrasten.

8. Installationssystem (2) nach einem der vorhergehenden Ansprüche,
wobei das Gestell (16) mehrere nach oben offene Aufnahmen (44, 56) aufweist, in oder auf die die Fachwerkelemente (20, 46) bringbar sind.

9. Installationssystem (2) nach Anspruch 7 und 8,
wobei eine Teilmenge der offenen Aufnahmen (44, 56) radial ausgerichtet ist,
wobei die radial ausgerichteten offenen Aufnahmen (44, 56) in axialer Richtung federnd gelagert sind.

10. Installationssystem (2) nach einem der Ansprüche 7 bis 9,
ferner aufweisend mindestens eine Transportsicherung (58) zum Halten der Fachwerkstruktur (18) in den offenen Aufnahmen (44, 56).

11. Luftfahrzeug (60), aufweisend einen Rumpf (4) und eine darin angeordnete, selbsttragende Fachwerkstruktur (18), die mittels eines Installationssystems (2) nach einem der vorhergehenden Ansprüche realisiert ist.

12. Luftfahrzeug (60) nach Anspruch 11, wobei die Fachwerkstruktur (18) an radial außenliegenden Bereichen einer Passagierkabine zur Aufnahme von Über-Kopf-Staufächern angeordnet ist.

13. Verfahren zur Installation einer selbsttragenden Fachwerkstruktur (18) mit mehreren miteinander verbundenen Fachwerkelementen (20, 46) an einer Rumpfstruktur (42) eines Luftfahrzeugs (60), wobei die Fachwerkstruktur (18) radial äußere geschlossene Fachwerkknoten (22) und radial innenliegende lösbare Verbindungsknoten (26) umfasst, das Verfahren aufweisend die Schritte:
- Bereitstellen einer vormontierten Fachwerkstruktur (18) in dem Rumpf (4) auf einem Gestell (16), das von einer Tragvorrichtung (8) über eine Bewegungsvorrichtung (14) bewegbar gehalten wird,
- Bewegen der Tragvorrichtung (8) an eine vorbestimmte Position innerhalb des Rumpfs (4),
- Arretieren der Tragvorrichtung (8),
- Anheben des Gestells (16) und verfahren in radialer Richtung zum Ausrichten an einer Rumpfstruktur (42),
- Verrasten der äußeren Fachwerkknoten (22) mit korrespondierenden Rastaufnahmen (50) an der Rumpfstruktur (42) durch Drängen der Fachwerkstruktur (18) in axialer Richtung in die Rastaufnahmen (50), wobei eine vorbestimmte Ausrichtung der Fachwerkelemente (20, 46) zueinander aufrechterhalten wird,
- Arretieren der radial innenliegenden Verbindungsknoten (26), und
- Entfernen des Gestells (16).

14. Verfahren nach Anspruch 13, wobei das Entfernen des Gestells (16) das Absenken des Gestells (16), das Bewegen des Gestells (16) in eine von der Rumpfstruktur (42) abgewandte Richtung und das Herausbewegen aus dem Rumpf (4) umfasst.

## Claims

1. Installation system (2) for installing a self-supporting truss structure on a fuselage structure (42) of an aircraft (60), the installation system (2) comprising: a truss structure (18) with a plurality of interconnected truss elements (20, 46), a mobile carrying device (8) movable on a floor (6) of the fuselage (4) with an upper receptacle (12), a rack (16) for temporarily holding the truss elements (20, 46) in predetermined relative positions to one another, and a movement device (14) which is arranged on the upper receptacle (12) and holds the rack (16) in a position that is adjustable relative to the upper receptacle (12), the truss structure (18) comprising radially outer closed truss nodes (22) and radially inner releasable connecting nodes (26), the movement device (14) being designed to move the rack (16) in one transport position and any installation position, the rack (16) being spaced further from the upper receptacle (12) in the installation positions than in the transport position, the installation system (2) being designed to move the mobile carrying device (8) on the floor (6) into a predetermined position within the fuselage (4) when the rack (16) is in the transport position and to lock it there, to move rack (16) by means of the movement device (14) into a suitable installation position and to lock the at least one lockable connecting node (26) by means of a drive (30) arranged on the rack (16).

2. Installation system (2) according to claim 1, wherein the connecting node (26) has a plurality of node elements (28) arranged at an angle to one another, each of which can be positively connected to a truss element (20, 46).

3. Installation system (2) according to claim 1 or 2, wherein the connecting node (26) is rigid.

4. Installation system (2) according to claim 2, wherein the connecting node (26) has first positive locking means (34) for each relevant truss element (20, 46), which are designed to complement second positive locking means on the truss elements (20, 46), and wherein the first positive locking means (34) are brought into a locking position by an actuator (32) provided in the connecting node (26), in which they are in the second positive locking means intervene, and can be brought into a plug-in position in which they can be moved to the second positive locking means.

5. Installation system (2) according to claim 4, wherein the first positive locking means (34) can be displaced in the plug-in position relative to the second positive locking means and can be locked in the respective position in the locking position.

6. Installation system (2) according to claim 4 or 5, wherein the actuator (32) can be connected to the drive (30).

7. Installation system (2) according to one of the preceding claims, further comprising a plurality of locking receptacles (50) which can be fastened in the fuselage structure (42) and are designed to receive locking elements (24) from radially outer nodes (22) of the truss structure (18) and to lock therewith by mechanical pressure directed from the relevant node (22) to the respective locking receptacle (50).

8. Installation system (2) according to one of the preceding claims, wherein the rack (16) has a plurality of upwardly open receptacles (44, 56) into or onto which the truss elements (20, 46) can be brought.

9. Installation system (2) according to claims 7 and 8, wherein a subset of the open receptacles (44, 56) are radially aligned, the radially aligned open receptacles (44, 56) being spring mounted in the axial direction.

10. Installation system (2) according to one of claims 7 to 9, further comprising at least one transport lock (58) for holding the truss structure (18) in the open receptacles (44, 56).

11. Aircraft (60), having a fuselage (4) and a self-supporting truss structure (18) arranged therein, which is realized by means of an installation system (2) according to one of the preceding claims.

12. Aircraft (60) according to claim 11, wherein the truss structure (18) is arranged on radially outer regions of a passenger cabin to accommodate overhead storage compartments.

13. Method for installing a self-supporting truss structure (18) with a plurality of interconnected truss elements (20, 46) on a fuselage structure (42) of an aircraft (60), the truss structure (18) comprising radially outer closed truss nodes (22) and radially inner detachable connecting nodes (26), the method comprising the steps:
- Providing a pre-assembled truss structure (18) in the fuselage (4) on a rack (16), which is movably held by a carrying device (8) via a movement device (14),
- Moving the carrying device (8) to a predetermined position within the fuselage (4),
- Locking the carrying device (8),
- Lifting the rack (16) and moving in the radial direction to align it with a fuselage structure (42),
- Locking the outer truss nodes (22) with corresponding latching receptacles (50) on the fuselage structure (42) by urging the truss structure (18) in the axial direction into the latching receptacles (50), whereby a predetermined alignment of the truss elements (20, 46) to one another is maintained,
- Locking the radially inner connecting nodes (26), and
- Remove the rack (16).

14. The method of claim 13, wherein removing the rack (16) includes lowering the rack (16), moving the rack (16) in a direction away from the fuselage structure (42), and moving out of the fuselage (4).

## Revendications

1. Système d'installation (2) pour installer une structure en treillis autoporteuse sur une structure de fuselage (42) d'un avion (60), le système d'installation (2) comprenant: une structure en treillis (18) avec une pluralité d'éléments de ferme interconnectés (20, 46), un dispositif de transport mobile (8) mobile sur un sol (6) du fuselage (4) avec un réceptacle supérieur (12), un support (16) pour maintenir temporairement les éléments de ferme (20, 46) dans des positions relatives prédéterminées l'un par rapport à l'autre, et un dispositif de mouvement (14) qui est disposé sur le réceptacle supérieur (12) et maintient le support (16) dans une position réglable par rapport au réceptacle supérieur (12), la structure en treillis (18) comprenant des nœuds de ferme fermés radialement extérieurs (22) et des nœuds de connexion libérables radialement intérieurs (26), le dispositif de mouvement (14) étant conçu pour déplacer le support (16) en un seul mouvement. Position de transport et toute position d'installation, le support (16) étant plus espacé du réceptacle supérieur (12) dans les positions d'installation qu'en position de transport, le système d'installation (2) étant conçu pour déplacer le dispositif de transport mobile (8) sur le sol (6) dans une position prédéterminée à l'intérieur du fuselage (4) lorsque le support (16) est en position de transport et pour l'y verrouiller, le support (16) au moyen du Déplacer le dispositif de mouvement (14) dans une position d'installation appropriée et verrouiller le ou les nœuds de connexion verrouillables (26) au moyen d'un entraînement (30) disposé sur le support (16).

2. Système d'installation (2) selon la revendication 1, dans lequel le nœud de connexion (26) comporte une pluralité d'éléments de nœud (28) disposés selon un angle les uns par rapport aux autres, dont chacun peut être connecté positivement à un élément de ferme (20, 46).

3. Système d'installation (2) selon la revendication 1 ou 2, dans lequel le nœud de connexion (26) est rigide.

4. Système d'installation (2) selon la revendication 2, dans lequel le nœud de connexion (26) présente des premiers moyens de verrouillage (34) pour chaque élément de ferme concerné (20, 46), qui sont réalisés de manière complémentaire avec des deuxièmes moyens de verrouillage sur les éléments de ferme (20, 46), les premiers moyens de verrouillage (34) pouvant être amenés par un actionneur (32) prévu dans le nœud de connexion (26), dans une position d'arrêt dans laquelle ils s'engagent dans les deuxièmes moyens de verrouillage, et dans une position d'enfichage dans laquelle ils peuvent être déplacés vers les deuxièmes moyens de verrouillage.

5. Système d'installation (2) selon la revendication 4, dans lequel les premiers moyens de verrouillage (34) peuvent être déplacés dans la position d'enfichage par rapport aux seconds moyens de verrouillage et peuvent être verrouillés dans la position respective en position de verrouillage.

6. Système d'installation (2) selon la revendication 4 ou 5, dans lequel l'actionneur (32) peut être connecté à l'entraînement (30).

7. Système d'installation (2) selon l'une des revendications précédentes, comprenant en outre une pluralité de réceptacles de verrouillage (50) qui peuvent être fixés dans la structure de fuselage (42) et sont conçus pour recevoir des éléments de verrouillage (24) provenant de nœuds radialement extérieurs (22) de la structure en treillis (18) et pour s'y verrouiller par une pression mécanique dirigée du nœud concerné (22) vers le réceptacle de verrouillage (50) correspondant.

8. Système d'installation (2) selon l'une des revendications précédentes, dans lequel le support (16) présente une pluralité de réceptacles (44, 56) ouverts vers le haut dans ou sur lesquels les éléments de ferme (20, 46) peuvent être amenés.

9. Système d'installation (2) selon les revendications 7 et 8, dans lequel un sous-ensemble des réceptacles ouverts (44, 56) sont alignés radialement, les réceptacles ouverts alignés radialement (44, 56) étant montés élastiquement dans la direction axiale.

10. Système d'installation (2) selon l'une des revendications 7 à 9, comprenant en outre au moins un verrou de transport (58) pour maintenir la structure en treillis (18) dans les réceptacles ouverts (44, 56).

11. Avion (60) comportant un fuselage (4) dans lequel est disposée une structure en treillis autoporteuse (18), qui est réalisé au moyen d'un système d'installation (2) selon l'une des revendications précédentes.

12. Avion (60) selon la revendication 11, dans lequel la structure en treillis (18) est disposée sur des régions radialement extérieures d'une cabine passagers pour loger des compartiments de rangement supérieurs.

13. Procédé d'installation d'une structure en treillis autoporteuse (18) avec une pluralité d'éléments de ferme interconnectés (20, 46) sur une structure de fuselage (42) d'un avion (60), la structure en treillis (18) comprenant des nœuds de ferme fermés radialement extérieurs (22) et des nœuds de connexion détachable radialement intérieurs (26), le procédé comprenant les étapes:
- Prévoir une structure en treillis (18) préassemblée dans le fuselage (4) sur un support (16), qui est maintenu mobile par un dispositif de transport (8) via un dispositif de mouvement (14),
- Déplacer le dispositif de transport (8) vers une position prédéterminée à l'intérieur du fuselage (4),
- Verrouillage du dispositif de transport (8),
- Soulever le support (16) et le déplacer dans le sens radial pour l'aligner avec une structure de fuselage (42),
- Verrouiller les nœuds de ferme externes (22) avec des réceptacles de verrouillage correspondants (50) sur la structure de fuselage (42) en poussant la structure en treillis (18) dans la direction axiale dans les réceptacles de verrouillage (50), grâce à quoi un alignement prédéterminé des éléments de ferme (20, 46) les uns par rapport aux autres est maintenu,
- Verrouillage des nœuds de connexion radialement intérieurs (26), et
- Retirez le support (16).

14. Procédé selon la revendication 13, dans lequel le retrait du support (16) comprend l'abaissement du support (16), le déplacement du support (16) dans une direction s'éloignant de la structure de fuselage (42) et le retrait du fuselage (4).
